# EUROPEAN PATENT SPECIFICATION

(11) **EP 3 089 302 B1**
(45) Date of publication and mention of the grant of the patent: **07.04.2021**
(21) Application number: 15165380.5
(22) Date of filing: 28.04.2015
(51) Int. Cl.: H02H 7/20, H02H 9/00, H02S 40/30, H02S 40/32, H01L 31/02, H01L 31/042

(54) **METHOD AND ARRANGEMENT FOR GROUNDING PHOTOVOLTAIC SYSTEM AND PHOTOVOLTAIC SYSTEM**
VERFAHREN UND ANORDNUNG ZUM ERDEN EINES PHOTOVOLTAISCHEN SYSTEMS UND PHOTOVOLTAISCHES SYSTEM
PROCÉDÉ ET DISPOSITIF POUR FAIRE LA MISE À LA TERRE D'UN SYSTÈME PHOTOVOLTAÏQUE ET SYSTÈME PHOTOVOLTAÏQUE

(43) Date of publication of application: 02.11.2016
(73) Proprietor: MARICI Holdings The Netherlands B.V., 3068AX Rotterdam (NL)
(72) Inventor: Kohvakka, Kimmo, 00380 Helsinki (FI); Jussila, Matti T., 00380 Helsinki (FI); Mattila, Simo, 00380 Helsinki (FI)
(74) Representative: Kolster Oy Ab

(56) References cited:
- EP-A1- 0 308 642
- CN-A- 103 474 969
- CN-A- 103 647 504
- JP-B2- 5 590 031
- US-A1- 2008 247 105
- US-A1- 2008 304 198

## Description

### FIELD OF THE INVENTION

The invention relates to a method and an arrangement for grounding a photovoltaic system, and to a photovoltaic system.

### BACKGROUND OF THE INVENTION

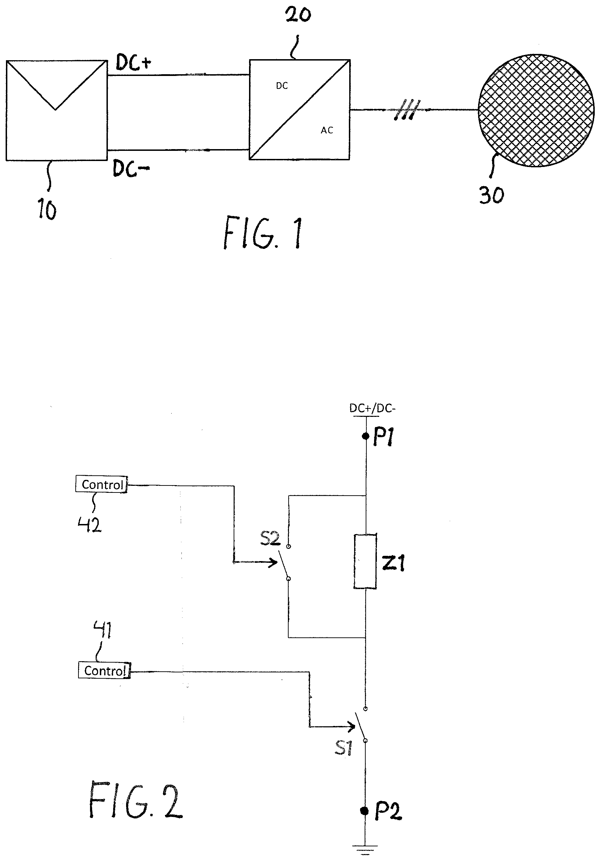

Photovoltaic systems may comprise one or more photovoltaic (PV) panels configured to provide a DC output. An example of a photovoltaic system is a photovoltaic generator, in which, as illustrated in Figure 1, one or more photovoltaic panels 10 supply DC power via a DC link DC+, DC- to one or more inverters 20 which convert the DC power to AC power, which may further be supplied to various AC loads via an AC network 30, for example. Large photovoltaic power plants consisting of a plurality of photovoltaic generators may comprise a plurality of parallel inverters, each receiving DC power from an array of photovoltaic panels, for example.

Some PV panel types may require one of the potentials (positive or negative) to be grounded in order to prevent potential induced degradation (PID) which may reduce the output level of the PV panel over time. Such grounding may be done in the PV inverter, for example, since the grounding conditions can be set by international standard IEC 62109-2, for example, and the conditions may need to be monitored before the inverter start-up. The monitoring can comprise insulation measurement for the PV generator before the PV inverter can connect to an external AC network (grid), for example. For this reason, some means for switching the PV grounding may be needed.

A possible way of implementing photovoltaic panel direct grounding may contain a fuse and a switch, such as a relay or a contactor. As PV generator sizes can nowadays exceed 1 MW, the parasitic electrical properties of PV generators start to play an important role in the behaviour of PV generators. A possible problem that may occur when closing (i.e. switching on, or into a conductive state) the PV grounding switch is the inrush current caused by parasitic capacitance between the photovoltaic panel field and the ground. Such inrush current can shorten the life time or even damage the switch and cause unnecessary fuse blowouts.

A possible solution to this problem caused by inrush transient current is to overdimension the components used for the grounding with respect to the normal current during the normal operation of the photovoltaic system. However, overdimensioning of the components, such as the switch, may cause considerable extra costs.

CN 103647504 discloses a solar cell grounding device and method. The disclosed solar cell grounding method comprises the following steps: A, utilizing a DC power supply to detect the DC output voltage of a photovoltaic module; B, carrying out step C when the DC output voltage of the photovoltaic module is higher than a predefined threshold and carrying out step D if the DC output voltage of the photovoltaic module is lower than the predefined threshold; C, enabling the DC output cathode of the photovoltaic module to be grounded through a resistor; D, enabling the DC output cathode of the photovoltaic module to be directly grounded.

US 2008/0247105 discloses a voltage protector that includes a first voltage clamping device configured to clamp a voltage of an input power applied to an electrical load, and a second voltage clamping device configured to clamp the voltage applied to the electrical load. A series inductance separates the first and second voltage clamping devices. A switching element is employed to selectively establish a direct coupling of the input power to the electrical load, where a circuit is employed to control the operation of the switching element.

### BRIEF DESCRIPTION OF THE INVENTION

The object of the invention is thus to provide a method and an apparatus for implementing the method so as to solve or at least alleviate the above problem or at least to provide an alternative solution. The object of the invention is achieved with a method, a computer program product, a system, and an inverter that are characterized by what is stated in the independent claims. Preferred embodiments of the invention are described in the dependent claims.

The invention is based on the idea of first switching on a first switch connected in series with at least a first impedance between the ground and a selected one of poles of the DC output of the one or more photovoltaic panels; and then, after switching on the first switch, switching on a second switch connected in parallel to the first impedance.

An advantage of the solution of the invention is that the photovoltaic system can be grounded with less current stress caused to the components used for the grounding, and thus the cost of the components used for the grounding is reduced due to the reduced inrush current withstand requirements.

### BRIEF DESCRIPTION OF THE FIGURES

In the following, the invention will be described in more detail in connection with preferred embodiments and with reference to the accompanying drawings, in which
Figure 1 illustrates an example of a photovoltaic system according to an embodiment;
Figure 2 illustrates an example of an arrangement according to an embodiment;
Figure 3 illustrates an example of an arrangement according to an embodiment; and
Figure 4 illustrates an example of an arrangement according to an embodiment.

### DETAILED DESCRIPTION OF THE INVENTION

The application of the invention is not limited to any specific system, but it can be used in connection with various electric systems. Moreover, the use of the invention is not limited to systems employing any specific fundamental frequency or any specific voltage level.

Figure 1 illustrates an example of a photovoltaic system. The exemplary system of Figure 1 comprises one or more photovoltaic panels 10 which can supply DC power via a DC link to an inverter 20. The DC link has at least a positive pole DC+ and a negative pole DC-. The inverter 20 can convert the DC power to AC power, which may then be supplied to an AC network 30, such as a three-phase AC network, for example.

According to an embodiment, a method for grounding such photovoltaic system comprising one or more photovoltaic panels 10 configured to provide a DC output, comprises switching on (i.e. into a conductive state) a first switch connected in series with at least a first impedance between the ground and a selected one of poles DC+, DC- of the DC output of the one or more photovoltaic panels 10, and, after switching on the first switch, switching on a second switch connected in parallel to the first impedance.

Figure 2 illustrates an example of an arrangement for grounding a photovoltaic system according to an embodiment. According to an embodiment, the arrangement for grounding the photovoltaic system comprises a first switch S1 and a first impedance Z1 connected in series between a first pole P1 and a second pole P2 of the arrangement. According to an embodiment, the first impedance Z1 comprises a first resistance and/or a first inductance, i.e. the first impedance Z1 may be resistive or inductive or both resistive and inductive. The arrangement further comprises a second switch S2 connected in parallel to the first impedance Z1. The first switch S1 and the second switch S2 may be any kind of controllable switches such as electromechanical switches, such as relays or contactors, or semiconductor switches, such as transistors or thyristors, for example. The arrangement may further comprise a first control arrangement 41 configured to control the first switch S1 and a second control arrangement 42 configured to control the second switch S2, for example. Although the control arrangements 41, 42 for the first switch S1 and the second switch S2 have been illustrated as separate units, they could be implemented as a single unit or as more than two units, for example. When used in a photovoltaic system, such as the one illustrated in Figure 1, the first pole P1 of the arrangement is connected to a positive pole DC+ or a negative pole DC- of the DC output of the one or more photovoltaic panels 10 and the second pole P2 of the arrangement is connected to the ground (earth).

According to an embodiment, the second control arrangement 42 is configured to switch on the second switch S2 after the first switch S1 is switched on. The switching on of the first switch S1 may be performed by the first control arrangement 41 and may take place automatically in response to meeting some predetermined condition(s) which the first control arrangement 41 may monitor, for example. Such predetermined condition(s) may include, for example, that the photovoltaic system has been started and/or that an insulation measurement for the PV generator has been performed, for example. The switching on of the first switch S1 by the first control arrangement 41 may also take place in response to a command from a user or an operator of the photovoltaic system, for example. In this case the first control arrangement 41 may simply consist of a user interface, which merely conveys the user/operator command to the first switch S1 by means of suitable signalling, for example.

When the first switch S1 is switched on and, consequently, the positive pole DC+ or the negative pole DC- of the DC output of the one or more photovoltaic panels 10 is connected to the ground through the first impedance Z1, the first impedance Z1 reduces the inrush current through the contacts of the first switch S1. After the photovoltaic field capacitance has discharged either partly or essentially completely, the first impedance Z1 may be bypassed with the second switch S2 by switching on the second switch S2. The switching on of the second switch S2 in the example of Figure 2 essentially short-circuits the first impedance Z1. According to an embodiment, the second control arrangement 42 may be configured to switch on the second switch S2 after a predetermined delay after the first switch S1 is switched on. The predetermined delay depends on the system and may be determined such that the photovoltaic field capacitance has discharged sufficiently. In this case the second control arrangement 42 may receive an indication of the switching on of the first switch S1, which then starts the counting of the delay before the second switch S2 is switched on. According to another embodiment, the second control arrangement 42 may be configured to switch on the second switch S2 in response to an absolute value of a voltage between the first pole P1 and the second pole P2, or a quantity indicative thereof, decreasing under a predetermined threshold after switching on the first switch S1. In this case, when the first switch S1 is first switched on, the absolute value of the voltage between the positive pole DC+ or the negative pole DC-, whichever is selected to be grounded, and the ground starts to decrease. Consequently, also the absolute value of the voltage between the first pole P1 and the second pole P2 of the arrangement connected between the selected one of the positive pole DC+ or the negative pole DC- and the ground starts to decrease. When this absolute value of the voltage has decreased under a predetermined threshold, the second switch S2 may be switched on. The decision on the switching on of the second switch S2 may be based on a direct measurement of the voltage between the first pole P1 and the second pole P2 with a suitable voltage measurement arrangement (not shown). Alternatively, it is also possible to base the switching on of the second switch S2 on a measurement of a quantity indicative of the absolute value of the voltage between the first pole P1 and the second pole P2. A quantity indicative of said absolute value of the voltage could be a current in the grounding path between the first pole P1 and the second pole P2, for example. Thus, the switching on of the second switch S2 could also be based on a current value measured on the grounding path between the first pole P1 and the second pole P2 with a suitable current measurement arrangement (not shown), for example.

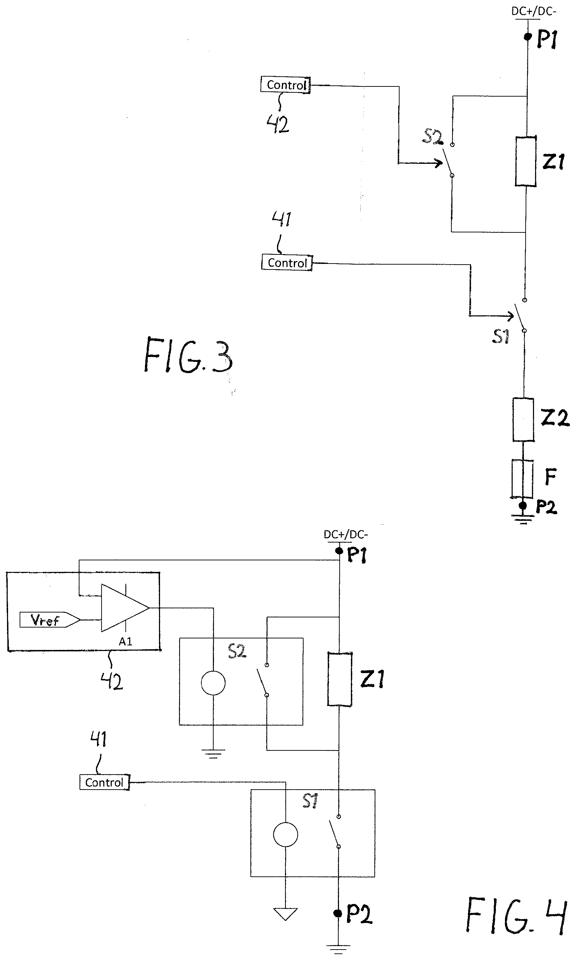

Figure 3 illustrates an example of an arrangement for grounding a photovoltaic system according to an embodiment. According to an embodiment, the arrangement for grounding the photovoltaic system comprises a second impedance Z2 connected in series with the first switch S1 and the second switch S2 between the first pole P1 and the second pole P2, as illustrated in the example of Figure 3. Thus, the second impedance Z2 is not connected in parallel to the second switch S2 and will not be by-passed when the second switch S2 is switched on. The second impedance Z2 may comprise a second resistance and/or a second inductance, i.e. the second impedance Z2 may be resistive or inductive or both resistive and inductive. The second impedance Z2 may be used to limit the current level in the grounding path during normal operation of the inverter 20. According to an embodiment, the arrangement for grounding the photovoltaic system comprises a fuse F connected in series with the first switch S1 and the second switch S2 between the first pole P1 and the second pole P2, as illustrated in the example of Figure 3. The possible fuse F may be used to limit the current level in the grounding path during a fault situation, for example. It should be noted that while the example of Figure 3 comprises both the second impedance Z2 and the fuse F, the arrangement for grounding the photovoltaic system could comprise only the second impedance Z2 or the fuse F, i.e. not necessarily both of them. In case the arrangement comprises a fuse F, then the switching of the first switch S1 and the second switch S2 according to any one of the embodiments herein may provide a further advantage that an unnecessary blowing of the fuse F due to the inrush transient current can be avoided. The arrangement for grounding the photovoltaic system could also comprise (not shown in the figures) measurement arrangements, such as current measurement of the grounding path and/or a voltage measurement of the voltage between the first pole P1 and the second pole P2, and/or various signalling arrangements between the control arrangements 41, 42 or to a user/operator of the system, for example.

Figure 4 illustrates an example of an arrangement for grounding a photovoltaic system according to an embodiment. In the example of Figure 4, the second control arrangement 42 has been implemented by means of a comparator circuit A1, which compares the voltage between the positive pole DC+ or the negative pole DC- and the ground to a predetermined reference voltage Vref and controls the second switch S2 to switch on when the voltage between the positive pole DC+ or the negative pole DC- and the ground has decreased under the predetermined reference voltage Vref. In this example the first switch S1 and the second switch S2 have been illustrated as electromechanical switches.

The arrangement for grounding the photovoltaic system according to any embodiment described herein could be implemented as a separate physical entity, such as a device, or it could be implemented at least partly within an existing device or element of a photovoltaic system. For example, the arrangement for grounding the photovoltaic system could be implemented within the inverter 20 of the photovoltaic system. Thus, all or some of the components of the arrangement, such as the first switch S1, the second switch S2 and the first impedance Z1, could reside inside the inverter 20. Also the control means 41, 42 could reside at least partly inside the inverter 20 and they could be implemented at least partly by using the control system of the inverter 20.

According to an embodiment, the first control arrangement 41 and/or the second control arrangement 42 or other possible control means controlling the first switch S1 and/or the second switch S2 according to any one of the above embodiments, or a combination thereof, may be implemented as one physical unit or as two or more separate physical units that are configured to implement the functionality of the various embodiments. Herein the term 'unit' generally refers to a physical or logical entity, such as a physical device or a part thereof or a software routine. The first control arrangement 41 and/or the second control arrangement 42 according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention, or a part thereof, may further comprise suitable input means for receiving e.g. measurement and/or control data, and output means for outputting e.g. control or other data. It is also possible to use a specific integrated circuit or circuits, or discrete electric components and devices for implementing the functionality according to any one of the embodiments.

The functionality of the various embodiments described herein can be implemented in existing inverters, for example. Present inverters may comprise processors and memory that can be utilized in the functions according to the various embodiments described above. Thus, modifications and configurations required for implementing an embodiment in existing inverters may be performed at least partly as software routines, which may be implemented as added or updated software routines. If at least part of the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory, e.g. a flash memory or an optical memory, from which it is loadable to the unit or units executing the program code. In addition, such a computer program code implementing the invention may be loaded to the unit or units executing the computer program code via a suitable data network, for example, and it may replace or update a possibly existing program code.

It is obvious to a person skilled in the art that as technology advances, the basic idea of the invention can be implemented in a variety of ways. Consequently, the invention and its embodiments are not restricted to the above examples, but can vary within the scope of the claims.

## Claims

1. A method for grounding a photovoltaic system comprising one or more photovoltaic panels (10) configured to provide a DC output, the method comprising:
switching on a first switch (S1) connected in series with at least a first impedance (Z1) between the ground and a selected one of poles (DC+, DC-) of the DC output of the one or more photovoltaic panels (10); and
after switching on the first switch (S1), switching on a second switch (S2) connected in parallel to the first impedance (Z1), wherein the second switch (S2) is switched on in response to an absolute value of a voltage between the selected one of the poles (DC+, DC-) of the DC output of the one or more photovoltaic panels (10) and the ground, or a quantity indicative thereof, decreasing under a predetermined threshold after switching on the first switch (S1).

2. A method as claimed in claim 1, wherein the selected one of the poles of the DC output of the one or more photovoltaic panels (10) is a positive pole (DC+) or a negative pole (DC-) of the DC output of the one or more photovoltaic panels.

3. A method as claimed in claim 1 or 2, wherein the switching on of the second switch (S2) essentially short-circuits the first impedance (Z1).

4. A method as claimed in any one of claims 1 to 3, wherein the first impedance (Z1) comprises a first resistance and/or a first inductance.

5. A computer program product comprising computer program code, wherein execution of the program code in a computer causes the computer to carry out the steps of the method according to any one of claims 1 to 4.

6. A photovoltaic system comprising one or more photovoltaic panels (10), which are configured to provide a DC output (DC+, DC-), and an arrangement comprising:
a first switch (S1) and a first impedance (Z1) connected in series between a first pole (P1) and a second pole (P2) of the arrangement;
a second switch (S2) connected in parallel to the first impedance (Z1); and
control means (42) configured to switch on the second switch (S2) after the first switch (S1) is switched on, wherein the control means (42) are configured to switch on the second switch (S2) in response to an absolute value of a voltage between the first pole (P1) and the second pole (P2), or a quantity indicative thereof, decreasing under a predetermined threshold after switching on the first switch (S1),
wherein the first pole (P1) of the arrangement is connected to a positive pole (DC+) or a negative pole (DC-) of the DC output of the one or more photovoltaic panels (10) and the second pole (P2) of the arrangement is connected to the ground.

7. A photovoltaic system as claimed in claim 6, wherein the switching on of the second switch (S2) essentially short-circuits the first impedance (Z1).

8. A photovoltaic system as claimed in claim 6 or 7, wherein the first impedance (Z1) comprises a first resistance and/or a first inductance.

9. A photovoltaic system as claimed in any one of claims 6 to 8, comprising a second impedance (Z2) connected in series with the first switch (S1) and the second switch (S2) between the first pole (P1) and the second pole (P2).

10. A photovoltaic system as claimed in any one of claims 6 to 9, comprising a fuse (F) connected in series with the first switch (S1) and the second switch (S2) between the first pole (P1) and the second pole (P2).

11. A photovoltaic system as claimed in any one of claims 6 to 10, comprising an inverter (20), wherein the first switch (S1), the second switch (S2), the first impedance (Z1), and the control means (42) reside inside the inverter (20).

12. An inverter for a photovoltaic system, the inverter being configured to receive DC power from an array of photovoltaic panels (10) of the photovoltaic system via a DC link (DC+, DC-), the inverter comprising an arrangement comprising:
a first switch (S1) and a first impedance (Z1) connected in series between a first pole (P1) and a second pole (P2) of the arrangement;
a second switch (S2) connected in parallel to the first impedance (Z1); and
control means (42) configured to switch on the second switch (S2) after the first switch (S1) is switched on, wherein the control means (42) are configured to switch on the second switch (S2) in response to an absolute value of a voltage between the first pole (P1) and the second pole (P2), or a quantity indicative thereof, decreasing under a predetermined threshold after switching on the first switch (S1),
wherein the arrangement is connected inside the inverter in such a way that, in use of the inverter in the photovoltaic system, the first pole (P1) of the arrangement is connected to a positive pole (DC+) or a negative pole (DC-) of the DC link and the second pole (P2) of the arrangement is connected to the ground.

## Patentansprüche

1. Verfahren zum Erden eines photovoltaischen Systems, das ein oder mehrere photovoltaische Paneele (10) umfasst, die dazu ausgelegt sind, einen DC-Ausgang bereitzustellen, wobei das Verfahren Folgendes umfasst:
Einschalten eines ersten Schalters (S1), der mit mindestens einer Impedanz (Z1) zwischen der Erde und einem ausgewählten von Polen (DC+, DC-) des DC-Ausgangs des einen oder der mehreren photovoltaischen Paneele (10) in Reihe verbunden ist; und
nach Einschalten des ersten Schalters (S1) Einschalten eines zweiten Schalters (S2), der parallel zur ersten Impedanz (Z1) verbunden ist, wobei der zweite Schalter (S2) in Reaktion darauf, dass ein Absolutwert einer Spannung zwischen dem ausgewählten der Pole (DC+, DC-) des DC-Ausgangs des einen oder der mehreren photovoltaischen Paneele (10) und der Erde oder eine Menge, die diesen anzeigt, nach Einschalten des ersten Schalters (S1) unter einen vorbestimmten Schwellwert verringert wird.

2. Verfahren nach Anspruch 1, wobei der ausgewählte der Pole des DC-Ausgangs des einen oder der mehreren photovoltaischen Paneele (10) ein positiver Pol (DC+) oder ein negativer Pol (DC-) des DC-Ausgangs des einen oder der mehreren photovoltaischen Paneele ist.

3. Verfahren nach Anspruch 1 oder 2, wobei das Einschalten des zweiten Schalters (S2) im Wesentlichen die erste Impedanz (Z1) kurzschließt.

4. Verfahren nach einem der Ansprüche 1 bis 3, wobei die erste Impedanz (Z1) einen ersten Widerstand und/oder eine erste Induktanz umfasst.

5. Computerprogrammprodukt, das Computerprogrammcode umfasst, wobei die Ausführung des Programmcodes in einem Computer bewirkt, dass der Computer die Schritte des Verfahrens nach einem der Ansprüche 1 bis 4 umsetzt.

6. Photovoltaisches System, das ein oder mehrere photovoltaische Paneele (10), die dazu ausgelegt sind, einen DC-Ausgang (DC+, DC-) bereitzustellen, sowie eine Anordnung umfasst, die Folgendes umfasst:
einen ersten Schalter (S1) und eine erste Impedanz (Z1), die zwischen einem ersten Pol (P1) und einem zweiten Pol (P2) der Anordnung in Reihe verbunden sind;
einen zweiten Schalter (S2), der parallel zur ersten Impedanz (Z1) verbunden ist; und
ein Steuermittel (42), das dazu ausgelegt ist, den zweiten Schalter (S2) einzuschalten, nachdem der erste Schalter (S1) eingeschaltet wurde, wobei das Steuermittel (42) dazu ausgelegt ist, den zweiten Schalter (S2) in Reaktion darauf, dass ein Absolutwert einer Spannung zwischen dem ersten Pol (P1) und dem zweiten Pol (P2) oder eine Menge, die diesen anzeigt, nach Einschalten des ersten Schalters (S1) unter einen vorbestimmten Schwellwert verringert wird, einzuschalten,
wobei der erste Pol (P1) der Anordnung mit einem positiven Pol (DC+) oder einem negativen Pol (DC-) des DC-Ausgangs des einen oder der mehreren photovoltaischen Paneele (10) verbunden ist und der zweite Pol (P2) der Anordnung mit der Erde verbunden ist.

7. Photovoltaisches System nach Anspruch 6, wobei das Einschalten des zweiten Schalters (S2) im Wesentlichen die erste Impedanz (Z1) kurzschließt.

8. Photovoltaisches System nach Anspruch 6 oder 7, wobei die erste Impedanz (Z1) einen ersten Widerstand und/oder eine erste Induktanz umfasst.

9. Photovoltaisches System nach einem der Ansprüche 6 bis 8, das eine zweite Impedanz (Z2) umfasst, die zwischen dem ersten Pol (P1) und dem zweiten Pol (P2) mit dem ersten Schalter (S1) und dem zweiten Schalter (S2) in Reihe verbunden ist.

10. Photovoltaisches System nach einem der Ansprüche 6 bis 9, das eine Sicherung (F) umfasst, die zwischen dem ersten Pol (P1) und dem zweiten Pol (P2) mit dem ersten Schalter (S1) und dem zweiten Schalter (S2) in Reihe verbunden ist.

11. Photovoltaisches System nach einem der Ansprüche 6 bis 10, das einen Wandler (20) umfasst, wobei sich der erste Schalter (S1), der zweite Schalter (S2), die erste Impedanz (Z1) und das Steuermittel (42) im Wandler (20) befinden.

12. Wandler für ein photovoltaisches System, wobei der Wandler dazu ausgelegt ist, via einen DC-Link (DC+, DC-) DC-Strom von einem Array von photovoltaischen Paneelen (10) des photovoltaischen Systems zu empfangen, wobei der Wandler eine Anordnung umfasst, die Folgendes umfasst:
einen ersten Schalter (S1) und eine erste Impedanz (Z1), die zwischen einem ersten Pol (P1) und einem zweiten Pol (P2) der Anordnung in Reihe verbunden sind;
einen zweiten Schalter (S2), der parallel zur ersten Impedanz (Z1) verbunden ist; und
ein Steuermittel (42), das dazu ausgelegt ist, den zweiten Schalter (S2) einzuschalten, nachdem der erste Schalter (S1) eingeschaltet wurde, wobei das Steuermittel (42) dazu ausgelegt ist, den zweiten Schalter (S2) in Reaktion darauf, dass ein Absolutwert einer Spannung zwischen dem ersten Pol (P1) und dem zweiten Pol (P2) oder eine Menge, die diesen anzeigt, nach Einschalten des ersten Schalters (S1) unter einen vorbestimmten Schwellwert verringert wird, einzuschalten,
wobei die Anordnung im Wandler derart verbunden ist, dass bei Verwendung des Wandlers im photovoltaischen System der erste Pol (P1) der Anordnung mit einem positiven Pol (DC+) oder einem negativen Pol (DC-) des DC-Links verbunden ist und der zweite Pol (P2) der Anordnung mit der Erde verbunden ist.

## Revendications

1. Procédé de mise à la terre d'un système photovoltaïque comprenant un ou plusieurs panneaux photovoltaïques (10) configurés pour fournir une sortie en courant continu, DC, le procédé comprenant :
la mise en marche d'un premier commutateur (S1) connecté en série à au moins une première impédance (Z1) entre la terre et un pôle sélectionné parmi des pôles (DC+, DC-) de la sortie DC des un ou plusieurs panneaux photovoltaïques (10) ; et
après la mise en marche du premier commutateur (S1), la mise en marche d'un deuxième commutateur (S2) connecté en parallèle à la première impédance (Z1), dans lequel le deuxième commutateur (S2) est mis en marche en réponse à une valeur absolue d'une tension entre le pôle sélectionné parmi les pôles (DC+, DC-) de la sortie DC des un ou plusieurs panneaux photovoltaïques (10) et la terre, ou une quantité indicative de celle-ci, diminuant sous un seuil prédéterminé après la mise en marche du premier commutateur (S1).

2. Procédé selon la revendication 1, dans lequel le pôle sélectionné parmi les pôles de la sortie DC des un ou plusieurs panneaux photovoltaïques (10) est un pôle positif (DC+) ou un pôle négatif (DC-) de la sortie DC des un ou plusieurs panneaux photovoltaïques.

3. Procédé selon la revendication 1 ou 2, dans lequel la mise en marche du deuxième commutateur (S2) court-circuite essentiellement la première impédance (Z1).

4. Procédé selon l'une quelconque des revendications 1 à 3, dans lequel la première impédance (Z1) comprend une première résistance et/ou une première inductance.

5. Produit de programme informatique comprenant un code de programme informatique, dans lequel l'exécution du code de programme dans un ordinateur amène l'ordinateur à effectuer les étapes du procédé selon l'une quelconque des revendications 1 à 4.

6. Système photovoltaïque comprenant un ou plusieurs panneaux photovoltaïques (10), qui sont configurés pour fournir une sortie DC (DC+, DC-), et un agencement comprenant :
un premier commutateur (S1) et une première impédance (Z1) connectés en série entre un premier pôle (P1) et un deuxième pôle (P2) de l'agencement ;
un deuxième commutateur (S2) connecté en parallèle à la première impédance (Z1) ; et
des moyens de commande (42) configurés pour mettre en marche le deuxième commutateur (S2) après que le premier commutateur (S1) a été mis en marche, dans lequel les moyens de commande (42) sont configurés pour mettre en marche le deuxième commutateur (S2) en réponse à une valeur absolue d'une tension entre le premier pôle (P1) et le deuxième pôle (P2), ou une quantité indicative de celle-ci, diminuant sous un seuil prédéterminé après la mise en marche du premier commutateur (S1),
dans lequel le premier pôle (P1) de l'agencement est connecté à un pôle positif (DC+) ou un pôle négatif (DC-) de la sortie DC des un ou plusieurs panneaux photovoltaïques (10), et le deuxième pôle (P2) de l'agencement est connecté à la terre.

7. Système photovoltaïque selon la revendication 6, dans lequel la mise en marche du deuxième commutateur (S2) court-circuite essentiellement la première impédance (Z1).

8. Système photovoltaïque selon la revendication 6 ou 7, dans lequel la première impédance (Z1) comprend une première résistance et/ou une première inductance.

9. Système photovoltaïque selon l'une quelconque des revendications 6 à 8, comprenant une deuxième impédance (Z2) connectée en série au premier commutateur (S1) et au deuxième commutateur (S2) entre le premier pôle (P1) et le deuxième pôle (P2).

10. Système photovoltaïque selon l'une quelconque des revendications 6 à 9, comprenant un fusible (F) connecté en série au premier commutateur (S1) et au deuxième commutateur (S2) entre le premier pôle (P1) et le deuxième pôle (P2).

11. Système photovoltaïque selon l'une quelconque des revendications 6 à 10, comprenant un onduleur (20), dans lequel le premier commutateur (S1), le deuxième commutateur (S2), la première impédance (Z1), et les moyens de commande (42) résident à l'intérieur de l'onduleur (20).

12. Onduleur pour un système photovoltaïque, l'onduleur étant configuré pour recevoir un courant DC à partir d'un réseau de panneaux photovoltaïques (10) du système photovoltaïque via une liaison DC (DC+, DC-), l'onduleur comprenant un agencement comprenant :
un premier commutateur (S1) et une première impédance (Z1) connectés en série entre un premier pôle (P1) et un deuxième pôle (P2) de l'agencement ;
un deuxième commutateur (S2) connecté en parallèle à la première impédance (Z1) ; et
des moyens de commande (42) configurés pour mettre en marche le deuxième commutateur (S2) après que le premier commutateur (S1) a été mis en marche, dans lequel les moyens de commande (42) sont configurés pour mettre en marche le deuxième commutateur (S2) en réponse à une valeur absolue d'une tension entre le premier pôle (P1) et le deuxième pôle (P2), ou une quantité indicative de celle-ci, diminuant sous un seuil prédéterminé après la mise en marche du premier commutateur (S1),
dans lequel l'agencement est connecté à l'intérieur de l'onduleur de telle sorte que, en cours d'utilisation de l'onduleur dans le système photovoltaïque, le premier pôle (P1) de l'agencement soit connecté à un pôle positif (DC+) ou un pôle négatif (DC-) de la liaison DC et que le deuxième pôle (P2) de l'agencement soit connecté à la terre.
